(19) Europäisches Patentamt
European Patent Office
Office européen des brevets

(11) **EP 0 887 917 B1**

(12) **FASCICULE DE BREVET EUROPEEN**

(45) Date de publication et mention
de la délivrance du brevet:
**01.08.2007 Bulletin 2007/31**

(51) Int Cl.:
*H02P 7/28* *(2006.01)*   *H02M 1/14* *(2006.01)*

(21) Numéro de dépôt: **97401490.4**

(22) Date de dépôt: **26.06.1997**

(54) **Procédé de commande d'un pont triphasé de régulation de charge par modulation de largeur d'impulsions et dispositif d'alimentation comportant un tel pont**

Steuerungsmethode einer Dreiphasengleichrichterbrückenschaltung für Last-Regulierung durch Pulsweite-Modulation und Netzteil mit einer solchen Brücke

Method for controlling a three-phase load control bridge by pulse width modulation and a supply device including such a bridge

(84) Etats contractants désignés:
**DE ES FR GB IT**

(43) Date de publication de la demande:
**30.12.1998 Bulletin 1998/53**

(73) Titulaire: **Valeo Switches & Detection Systems - VSDS**
**94000 Créteil (FR)**

(72) Inventeur: **Permuy, Alfred**
**92500 Rueil Malmaison (FR)**

(74) Mandataire: **Le Forestier, Eric**
**Cabinet Régimbeau**
**20, rue de Chazelles**
**75847 Paris cedex 17 (FR)**

(56) Documents cités:
**US-A- 5 365 422**

• **PATENT ABSTRACTS OF JAPAN vol. 014, no. 161 (E-0909), 28 mars 1990 & JP 02 017865 A (MITSUBISHI ELECTRIC CORP), 22 janvier 1990,**

**Description**

La présente invention est relative à un procédé pour la commande d'un pont triphasé pour la régulation d'une charge inductive par modulation de largeur d'impulsions.

Elle concerne également un dispositif d'alimentation comportant un tel pont de régulation.

Un tel dispositif est par exemple un moteur électrique utilisé dans un véhicule automobile, par exemple pour le réglage des sièges, la commande de vitres, etc..

On connaît par US A 5365 422 la commande d'un pont d'alimentation d'un moteur triphasé minimisant le courant efficace traversant les moyens capacitifs dudit pont.

Le pont de régulation d'un tel dispositif est classiquement alimenté par une source de tension continue, telle que la batterie du véhicule. La tension délivrée par cette source est découpée dans le temps selon un procédé de modulation de largeur d'impulsions, de manière à modifier la valeur moyenne du courant circulant dans la charge. A la fréquence de découpage, la charge est de nature essentiellement inductive. Par conséquent, par le terme valeur moyenne utilisé pour des tensions ou des courants, il faut comprendre qu'il s'agit d'une moyenne temporelle réalisée sur plusieurs périodes de découpage. Pour lisser les variations du courant délivré par la source, un condensateur est monté en parallèle entre les deux extrémités du pont.

Or, un tel condensateur de lissage s'avère d'un encombrement important et corrollairement d'un coût non négligeable.

Un but de l'invention est donc de réduire le dimensionnement des condensateurs de lissage des ponts de régulation de charge par modulation d'impulsions.

Selon l'invention, ce but est atteint en ce que les séquences selon lesquelles les interrupteurs du pont de régulation sont actionnés sont choisies de façon à minimiser le courant efficace qui traverse les moyens capacitifs montés entre les extrémités dudit pont.

La taille et le coût d'un condensateur dépendent en effet fortement du courant efficace qui le traverse.

En minimisant le courant efficace qui traverse les moyens capacitifs montés en parallèle sur le pont de régulation, les séquences de commande du dispositif proposé par l'invention permettent de réduire le dimensionnement - et donc le coût - de ces moyens capacitifs.

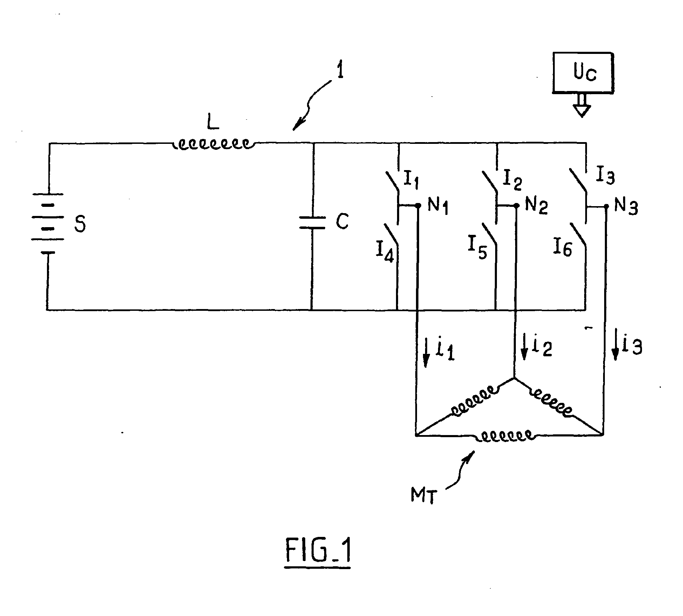

D'autres caractéristiques et avantages de l'invention ressortiront encore de la description qui suit. Cette description est purement illustrative et non limitative. Elle doit être lue en regard de la figure 1 annexée qui est une représentation schématique d'un dispositif d'alimentation à pont triphasé.

Plus particulièrement, le pont de régulation triphasé illustré sur la figure 1 alimente un moteur triphasé $M_T$.

Ce pont est alimenté par une source de tension S à travers un circuit de filtrage 1 comportant une inductance L et un condensateur C.

Il comporte six interrupteurs, référencés de I1 à I6.

Les interrupteurs I4 à I6 sont montés entre d'une part un point à une tension neutre ou nulle (masse) et d'autre part des noeuds N1 à N3 d'alimentation de la charge que constitue le moteur $M_T$.

Les interrupteurs I1 à I3 sont montés entre l'extrémité de la source S opposée au point à la tension neutre et respectivement lesdits noeuds N1 à N3.

Le condensateur C est monté en parallèle par rapport audit pont, entre la borne commune aux interrupteurs I1 à I3 et la borne commune aux interrupteurs I4 à I6.

L'inductance L est par exemple montée entre la borne commune aux interrupteurs I1 à I3 et la source S.

Les interrupteurs I1 à I6 sont des transistors de type MOS. Ils sont commandés par une unité de commande $U_C$ de la façon qui va maintenant être décrite.

Des diodes (non représentées), dites diodes de roue libre, sont montées en parallèle sur les interrupteurs I1 à I6, ainsi qu'il est connu de l'Homme du métier.

Avantageusement, les interrupteurs I1 et I4 (resp. I2 et I5, ainsi que I3 et I6) sont commandés de façon opposée pour limiter les pertes dans lesdites diodes de roue libre. Ils doivent être non recouvrants pour éviter les court-circuits.

Les conditions de charge du moteur MT sont définies par les potentiels moyens $V_1$, $V_2$, $V_3$ aux trois noeuds N1, N2, N3 d'alimentation de la charge, ainsi que par les intensités $i_1$, $i_2$, $i_3$ des courants entrant dans le moteur par ces trois noeuds.

Ces six paramètres se ramènent à la connaissance de quatre d'entre eux puisque

$$i_1 + i_2 + i_3 = 0$$

et

que seules les différences de potentiel entre les différents noeuds N1 à N3 interviennent dans le fonctionnement du moteur MT.

On démontre que ces conditions de charge peuvent prendre sept états différents fonctions des trois courants $i_1$, $i_2$, $i_3$.

Soit i le courant en entrée du pont et $r_0$ à $r_6$ les différents rapports cycliques correspondant aux différents états de charge

$i = 0$ pour $r_0$
$i = i_1$ pour $r_1$
$i = i_2$ pour $r_2$
$i = i_3$ pour $r_3$
$i = i_1 + i_2$ pour $r_4$
$i = i_1 + i_3$ pour $r_5$
$i = i_2 + i_3$ pour $r_6$
avec $\Sigma\, r_j = 1$.

En d'autres termes, les paramètres $r_0$ à $r_6$ sont les durées relatives, rapportées à un cycle pendant lesquelles i prend les différentes valeurs ci-dessus indiquées.

En posant

$$\alpha+= r_1 + r_6, \quad \alpha_- = r_1 - r_6, \quad \beta_+ = r_2 + r_5, \quad \beta_- = r_2 - r_5,$$

$$\gamma+ = r_3 + r_4 \text{ et } \gamma_- = r_3 - r_4$$

on montre que minimiser le courant efficace sur le condensateur C revient à minimiser l'expression

$$(\alpha_+)i_1{}^2 + (\beta_+)\,i_2{}^2 + (\gamma_+)i_3{}^2 - 2V_{13}i_1.I - 2V_{23}i_2.I$$

où $V_{ij}$ est une tension moyenne qui désigne $(V_i - V_j)/U$, $V_i$ désignant la tension au noeud i, U désignant la tension de la batterie,
et où I est le courant efficace en entrée du montage que constituent le condensateur C et le pont de régulation.

On montre par ailleurs que $\alpha+$, $\beta+$, $\gamma+$, $\alpha-$, $\beta-$, $\gamma-$ sont contraints par les relations suivantes :

$$(\alpha_+) \geq -(\alpha_-) \; ; \; (\alpha_+) \geq (\alpha_-) \; ; \qquad .$$

$$(\beta_+) \geq -[(\alpha_-) - V_{22}] \; ; \; (\beta_+) \geq [(\alpha_-) - V_{12}] \; ;$$

$$(\gamma_+) \geq -[(\alpha_-) - V_{13}] \; ; \; (\gamma_+) \geq [(\alpha_-) - V_{13}] \; ;$$

$$(\alpha_+) + (\beta_+) + (\gamma_+) \leq 1.$$

Plusieurs cas sont donc à envisager selon les valeurs de $\alpha$.

Notamment, dans le cas où $0 \leq V_{12} \leq V_{13}$, on démontre que :

* Si $2V_{13} - V_{12} \leq 1$ et $V_{12} + V_{13} \leq 1$
** si $i_2 i_3 \geq 0$, le minimum est obtenu pour

$$(\alpha_-) = 0, \ (\alpha_+) = 0, \ (\beta_+) = V_{12}, \ (\gamma_+) = V_{13}, \ (\beta_-) = -V_{12},$$

$$(\gamma_-) = -V_{13}$$

c'est à dire pour $r_1 = 0$, $r_6 = 0$, $r_2 = 0$, $r_5 = V_{12}$, $r_3 = 0$, $r_4 = V_{13}$
** si $i_1 i_2 \geq 0$
il est obtenu pour

$$(\alpha_-)=V_{13}, \ (\alpha_+) = V_{13}, \ (\beta_-) = V_{13}-V_{12}, \ (\gamma_-) = 0, \ (\beta_+) = V_{13}-V_{12}$$

$$(\alpha_+) = 0$$

soit : $r_1 = V_{13}$, $r_6 = 0$, $r_2 = V_{13}$, $r_5 = 0$, $r_3 = 0$, $r_4 = 0$
** si $i_1 i_3 \geq 0$
le maximum est obtenu pour

$$(\alpha_-)=V_{12}, (\alpha_+)=V_{12}, (\beta_+)= 0, \ (\beta_-) = 0, \ (\gamma_+) = V_{23}, \ (\gamma_-) = -V_{23}$$

$$r_1 = V_{12}, \ r_6 = 0, \ r_2 = 0, \ r_5 = 0, \ r_3 = 0, \ r_4 = V_{23}$$

* Si $2V_{13}-V_{12} \geq 1$ et $V_{12} + V_{13} \leq 1$
** si $i_2 i_3 \geq 0$ d) $(\alpha_-) = 0$

$$r_1 = 0, \ r_2 = 0, \ r_3 = 0, \ r_4 = V_{13}, \ r_5 = V_{12}, \cdot r_6 = 0,$$

$$r_0 = 1-V_{12}-V_{13}$$

** si $i_1 i_2 \geq 0$ b) $(\alpha_-) = 1 + V_{12}-V_{13}$

$$r_1 = 1-V_{23}, \ r_2 = 1-V_{13}, \ r_3 = 1-V_{13}-V_{23}, \ r_4 = 0, \ r_5 = 0,$$

$$r_6 = 0, \ r_0 = -2 + 2V_{13} + 2V_{23}$$

** si $i_1 i_3 \geq 0$ b) $(\alpha_-) = V_{12}$

$$r_1 = V_{12}, \ r_2 = 0, \ r_3 = 0, \ r_4 = V_{23}, \ r_5 = 0, \ r_6 = 0,$$

$$r_0 = 1-V_{13}$$

* Si $2V_{13}-V_{12} \leq 1$ et $V_{12} + V_{13} \geq 1$
** si $i_2 i_3 \geq 0$ d) $(\alpha_-) = V_{12} + V_{13} - 1$

$$r_1 = V_{12} + V_{13} - 1, \ r_2 = 0, \ r_3 = 0, \ r_4 = 1 -V_{12},$$

$$r_5 = 1 - V_{13}, \ r_6 = 0, \ r_0 = 0$$

** si $i_1 i_2 \geq 0$ b) $(\alpha_-) = V_{13}$

$$r_1 = V_{13}, \quad r_2 = V_{23}, \quad r_3 = 0, \quad r_4 = 0, \quad r_5 = 0,$$
$$r_6 = 0, \quad r_0 = 1 - V_{13} - V_{23}$$

** si $i_1 i_3 \geq 0$ b) $(\alpha_-) = V_{12}$

$$r_1 = V_{12}, \quad r_2 = 0, \quad r_3 = 0, \quad r_4 = V_{23}, \quad r_5 = 0, \quad r_6 = 0,$$
$$r_0 = 1 - V_{13}$$

* Si $2V_{13} - V_{12} \geq 1$ et $V_{12} + V_{13} \geq 1$
** si $i_2 i_3 \geq 0$ d) $(\alpha_-) = V_{12} + V_{13} - 1$

$$r_1 = V_{12} + V_{13} - 1, \quad r_2 = 0, \quad r_3 = 0, \quad r_4 = 1 - V_{12},$$
$$r_5 = 1 - V_{13}, \quad r_6 = 0, \quad r_0 = 0$$

** si $i_1 i_2 \geq 0$ b) $(\alpha_-) = 1 + V_{12} - V_{13}$

$$r_1 = 1 - V_{23}, \quad r_2 = 1 - V_{13}, \quad r_3 = 1 - V_{13} - V_{23}, \quad r_4 = 0, \quad r_5 = 0,$$
$$r_6 = 0, \quad r_0 = -2 + 2V_{13} + 2V_{23}$$

** si $i_1 i_3 \geq 0$ b) $(\alpha_-) = V_{12}$

$$r_1 = V_{12}, \quad r_2 = 0, \quad r_3 = 0, \quad r_4 = V_{23}, \quad r_5 = 0, \quad r_6 = 0,$$
$$r_0 = 1 - V_{13}$$

On notera que les autres cas se ramènent au cas qui vient d'être détaillé en transposant les indices.

Par exemple, le cas $V_{12} \leq 0 \leq V_{13}$ correspond au cas où $0 \leq V_{21} \leq V_{23}$
et il suffit alors de permuter $i_1$ et $i_2$, $r_1$ et $r_2$, ainsi que $r_5$ et $r_6$.

Dans la pratique, la charge est conçue de manière à présenter un cos $\varphi$ proche de 1 ce qui signifie que, à basses fréquences par rapport à la fréquence de découpage, la charge est de nature essentiellement résistive. Le courant moyen dans la charge s'exprime alors comme une fonction binaire de la tension moyenne à ses bornes.

On a alors, pour $i_1 . i_2 \geq 0$ la stratégie résumée dans le tableau suivant.

| | Si | état des transistors | I _ I <br> _ I _ | _ I I <br> I _ _ | I I I ou _ _ _ <br> _ _ _ I I I |
|---|---|---|---|---|---|
| si $V_{31} \geq 0$ $V_{32} \geq 0$ | $V_{31} - V_{32} \leq 1$ | durée relative | $V_{32}$ | $V_{31}$ | $1 - V_{21} + V_{31}$ |
| | Si | état des transistors | _ _ I <br> I I _ | I _ I <br> _ I _ | I _ I <br> _ I _ |
| | $V_{31} - V_{32} \geq 1$ | durée relative | $V_{31} + V_{32-1}$ | $1 + V_{13}$ | $1 + V_{23}$ |

(suite)

| | | | | | |
|---|---|---|---|---|---|
| Si V$_{31}$≤0 V$_{32}$≤0 | Si V$_{31}$-V$_{32}$ ≥-1 | état des transistors | I _ _ / _ I I | _ I _ / I _ I | I I I ou / _ _ _ I I I |
| | | durée relative | V$_{13}$ | V$_{23}$ | 1+V$_{31}$+V$_{32}$ |
| | Si V$_{31}$-V$_{32}$ ≤-1 | état des transistors | _ I _ / I _ I | _ I _ / I _ I | _ I I / I _ _ |
| | | durée relative | V$_{32}$+1 | V$_{31}$+1 | V$_{13}$+V$_{23}$-1 |
| sinon | V$_{13}$ ≥ 0 V$_{32}$≥0 | état des S$_i$ transistors | I _ _ / _I I | I _ I / _ I _ | I I I ou _ _ _ / _ _ _I I I |
| | | durée relative | V$_{13}$ | V$_{23}$ | 1+V$_{21}$ |
| | Si V$_{23}$≥0 V$_{31}$≥0 | état des transistors | _ I _ / I _ I | _ I I / I _ _ | I I I ou _ _ _ / _ _ _ I I I |
| | | durée relative | V$_{31}$+V$_{32}$-1 | V$_{31}$ | 1+V$_{12}$ |

où les états des transistors sont à chaque fois donnés sur deux lignes dans un ordre correspondant à :

I$_1$ I$_2$ I$_3$

I$_4$ I$_5$ I$_6$

l'état I désignant l'état fermé, l'état _ désignant l'état ouvert,

les autres cas ( i$_2$ • i$_3$ ≥ 0 ou i$_3$ • i$_1$ ≥ 0) se déduisant du tableau précédent par une simple permutation d'indice.

Généralement, les tensions moyennes V$_{ij}$ sont imposées, et les potentiels moyens V$_i$ s'en déduisent.

Le dispositif d'alimentation comporte alors avantageusement des moyens pour la mesure des courants i$_1$ à i$_3$ (shunt). Les valeurs de courant ainsi mesurées sont transmises à l'unité de commande UC, qui actionne les interrupteurs I1 à I6 en fonction desdites valeurs de courant

Egalement, l'unité de commande U$_c$ peut mémoriser les caractéristiques de la charge, auquel cas ces moyens de mesure de courant ne sont pas nécessaires.


## Revendications

1. Procédé de commande d'un pont d'interrupteurs triphasé (I1 à I6) pour la régulation d'une charge par modulation de largeur d'impulsions, ledit pont étant alimenté par une source de tension continue (S), des moyens capacitifs de lissage (C) étant montés entre les extrémités dudit pont,

   **caractérisé en ce que**, en désignant par i$_1$, i$_2$ et i$_3$ les courants entrant dans la charge par les trois noeuds du pont correspondant aux trois phases de la charge, et par V$_{ij}$ les rapports (V$_i$-V$_j$)/U, où U est la tension d'alimentation du pont et où V$_1$, V$_2$ et V$_3$ sont les tensions respectivement à chacun des trois noeuds précités,

   on commande le pont triphasé dans le cas où i$_1$.i$_2$ ≥ 0 selon une séquence de commande correspondant au tableau suivant:

| | | | | | |
|---|---|---|---|---|---|
| Si V$_{31}$≥0 V$_{32}$≥0 | Si V$_{31}$-V$_{32}$ ≤ 1 | état des transistors | I _ I / _ I_ | _ I I / I _ _ | I I I ou _ _ _ / _ _ _ I I I |
| | | durée relative | V$_{32}$ | V$_{31}$ | 1-V$_{21}$+V$_{31}$ |
| | Si V$_{31}$-V$_{32}$ ≥1 | état des transistors | _ _ I / I I _ | I _ I / _ I _ | I _ I / _ I _ |
| | | durée relative | V$_{31}$+V$_{32}$-1 | 1+V$_{13}$ | 1+V$_{23}$ |

(suite)

| Si V$_{31}$≤0 V$_{32}$≤0 | Si<br>V$_{31}$-V$_{32}$≥-1 | état des transistors | I _ _<br>_ I I | _ I _<br>I _ I | I I I ou _<br>_ _ _ I I I |
|---|---|---|---|---|---|
| | | durée relative | V$_{13}$ | V$_{23}$ | 1+V$_{31}$+V$_{32}$ |
| | Si<br>V$_{31}$-V$_{32}$ ≤-1 | état des transistors | _ I _<br>I _ I | _ I _<br>I _ I | _ I I<br>I _ _ |
| | | durée relative | V$_{32}$+1 | V$_{31}$+1 | V$_{13}$+V$_{23}$-1 |
| sinon | Si<br>V$_{13}$≥ 0<br>V$_{32}$≥ 0 | état des transistors | I _ _<br>_ I I | I _ I<br>_ I _ | I I I ou _ _ _<br>_ _ _ I I I |
| | | durée relative | V$_{13}$ | V$_{23}$ | 1+V$_{21}$ |
| | Si<br>V$_{23}$ ≥ 0<br>V$_{31}$≥0 | état des transistors | _ I _<br>I _ I | _ I I<br>I _ _ | I I I ou _ _ _<br>_ _ _ I I I |
| | | durée relative | V$_{31}$+V$_{32-1}$ | V$_{31}$ | 1+V$_{12}$ |

tableau dans lequel les états des transistors sont à chaque fois donnés sur deux lignes, la première qui correspond aux interrupteurs (I1, I2, I3) reliés d'une part aux trois noeuds précités (N1, N2, N3) et d'autre part à une borne d'alimentation du pont, la seconde qui correspond aux interrupteurs (I4, I5, I6) reliés d'une part aux trois noeuds précités et d'autre part à un point à une tension neutre ou nulle, les symboles I et _ représentant les états ouverts ou fermés des différents interrupteurs I (I1 à 16) du pont,

les cas où $i_2 i_3 \geq 0$ ou $i_3 i_1 \geq 0$ se déduisant par permutation d'indices du tableau précédent.

**2.** Dispositif pour l'alimentation d'une charge comportant un pont d'interrupteurs (I1 à I6), une source de tension continue (S) qui alimente ledit pont, des moyens capacitifs (C) montés entre les extrémités dudit pont, ainsi qu'une unité de commande (U$_c$) qui actionne les interrupteurs (I1 à I6) dudit pont de façon à réguler la charge (M$_T$) par modulation de largeur d'impulsions, **caractérisé en ce que** l'unité de commande (U$_c$) actionne les interrupteurs (Il à I6) dudit pont selon le procédé de la revendication 1.

**3.** Dispositif d'alimentation selon la revendication 2, **caractérisé en ce qu'**il comporte des moyens pour la mesure du courant dans les différentes branches de sortie du pont triphasé, les valeurs de courant ainsi mesurées étant transmises à l'unité de commande (U$_c$), ladite unité actionnant les interrupteurs (I1 à I4) dudit pont en fonction desdites valeurs de courant.

**4.** Dispositif d'alimentation d'un moteur électrique de véhicule automobile, **caractérisé en ce qu'**il est constitué par un dispositif selon l'une des revendications 1 à 3.

**Claims**

**1.** Method for controlling a bridge of three-phase switches (11 to 16) for the regulation of a load by pulse width modulation, the said bridge being supplied by a direct voltage source (S), capacitive smoothing means (C) being fitted between the ends of the said bridge, **characterised in that**, by designating as $i_1$, $i_2$, $i_3$ the currents which enter the charge via the three nodes of the bridge corresponding to the three phases of the charge, and designating as V$_{ij}$ the ratios $(V_i-V_j)/U$, where U is the supply voltage of the bridge and $V_1$, $V_2$ and $V_3$ are the voltages respectively at each of the three aforementioned nodes, the three-phase bridge is controlled in the case when $i_1.i_2 \geq 0$ according to a control sequence corresponding to the following table:

| If<br>V$_{31}$ ≥ 0<br>V$_{32}$ ≥0 | If<br>V$_{31}$.V$_{32}$≤1 | state of the transistors | I _ I<br>_ I _ | _ I I<br>I _ _ | I I I or _ _ _<br>_ _ _ I I I |
|---|---|---|---|---|---|
| | | relative duration | V$_{32}$ | V$_{31}$ | 1-V$_{21}$+V$_{31}$ |

| | if | state of the | _ _ I | I _ I | I _ I |
|---|---|---|---|---|---|

(continued)

| | | | | | |
|---|---|---|---|---|---|
| | $V_{31}.V_{32} \geq 1$ | transistors | I I _ | _ I _ | _ I _ |
| | | relative duration | $V_{31}+V_{32}-1$ | $1+V_{13}$ | $1+V_{23}$ |
| If $V_{31} \leq 0$ $V_{32} \leq 0$ | If $V_{31}.V_{32} \geq -1$ | state of the transistors | I_ _ <br> _ I I | _ I _ <br> I _ I | I I I or_ _ _ <br> _ _ _ I I I |
| | | relative duration | $V_{13}$ | $V_{23}$ | $1+V_{31}+V_{32}$ |
| | If $\leq -1$ $V_{31}.V_{32} \leq -1$ | state of the transistors | _ I _ <br> I _ I | _ I _ <br> I _ I | _ I I <br> I_ _ |
| | | relative duration | $V_{32}+1$ | $V_{31}+1$ | $V_{13+}V_{23} -1$ |
| Otherwise | If $V_{13} \geq 0$ $V_{32} \geq 0$ | state of the transistors | I _ _ <br> _ I I | I _ I <br> _I _ | I I I or _ _ _ <br> _ _ _ I I I |
| | | relative duration | $V_{13}$ | $V_{23}$ | $1 +V_{21}$ |
| | If $V_{23} \geq 0$ $V_{31} \geq 0$ | state of the transistors | _ I _ <br> I _ I | _ I I <br> I _ _ | I I I or_ _ _ <br> _ _ _ I I I |
| | | relative duration | $V_{31} + {}_{V32}-1$ | $V_{31}$ | $1+V_{12}$ |

in which table the states of the transistors are in each case given on two lines, the first corresponding to the switches (I1, I2, I3) connected firstly to the three aforementioned nodes (N1, N2, N3) and secondly to a supply terminal of the bridge, and the second corresponding to the switches (I4, I5, I6) which are connected firstly to the three aforementioned nodes and secondly at one point to a neutral or zero voltage, the symbols I and _ representing the open or closed states of the different switches I (I1 to I6) of the bridge, the cases in which $i_2i_3 \geq 0$ or $i_3i_1 \geq 0$ being deduced by permutation of indices of the preceding table.

2. Device for the supply of a charge comprising a bridge of switches (I1 to I6), a direct voltage source (S) which supplies the said bridge, capacitive means (C) which are fitted between the ends of the said bridge, as well as a control unit ($U_c$) which activates the switches (11 to 16) of the said bridge such as to regulate the load ($M_T$) by pulse width modulation, **characterised in that** the control unit ($U_c$) activates the switches (11 to 16) of the said bridge according to the method of claim 1.

3. Supply device according to claim 2, **characterised in that** it comprises means for measurement of the current in the different output branches of the three-phase bridge, the current values thus measured being transmitted to the control unit ($U_c$), the said unit activating the switches (I1 to I4) of the said bridge according to the said current values.

4. Device for supply of a motor vehicle electric motor, **characterised in that** it consists of a device according to one of claims 1 to 3.

**Patentansprüche**

1. Verfahren zur Steuerung einer Dreiphasen-Brückenschaltung mit Schaltern ($I_1$ bis $I_6$) zur Regelung einer Last durch Pulsweitenmodulation, wobei die besagte Brückenschaltung durch eine Gleichspannungsquelle (S) gespeist wird, wobei zwischen den Enden der besagten Brückenschaltung kapazitive Glättungsmittel (C) geschaltet sind, **dadurch gekennzeichnet, dass**, wenn mit $i_1$, $i_2$ und $i_3$ die Ströme, die über die drei den drei Phasen der Last entsprechenden Knoten der Brückenschaltung in die Last eingespeist werden, und mit $V_{ij}$ die Verhältnisse $(V_i-V_j)$ /U bezeichnet werden, wobei U die Speisespannung der Brückenschaltung ist und $V_1$, $V_2$ und $V_3$ die jeweiligen Spannungen an jedem der drei vorgenannten Knoten sind, die Dreiphasenbrückenschaltung in dem Fall, in dem $i_1.i_2 \geq 0$ ist, nach einer Steuersequenz entsprechend der nachfolgenden Tabelle gesteuert wird:

| | | | | | |
|---|---|---|---|---|---|
| Wenn V31≥0 V$_{32}$≥0 | Wenn V$_{31}$-V$_{32}$≤1 | Zustand der Transistoren | I _ I / _ I _ | _ I I / I _ _ | I I I od. _ _ _ / _ _ _ I I I |
| | | Relative Dauer | V$_{32}$ | V$_{31}$ | 1-V$_{21}$+V$_{31}$ |
| | Wenn V$_{31}$-V$_{32}$≥1 | Zustand der Transistoren | _ _ I / I I _ | I _ I / _ I _ | I _ I / _ I _ |
| | | Relative Dauer | V$_{31}$+V$_{32}$-1 | 1+V$_{13}$ | 1 +V$_{23}$ |
| Wenn V$_{31}$≤0 V$_{32}$≤0 | Wenn V$_{31}$-V$_{32}$≥-1 | Zustand der Transistoren | I _ _ / _ I I | _ I _ / I _ I | I I I od. _ _ _ / _ _ _ I I I |
| | | Relative Dauer | V$_{13}$ | V$_{23}$ | 1-V$_{31}$+V$_{32}$ |
| | Wenn V$_{31}$- V$_{32}$≤-1 | Zustand der Transistoren | _ I _ / I _ I | _ I _ / I _ I | _ I I / I _ _ |
| | | Relative Dauer | V$_{32}$+1 | V$_{31}$+1 | V$_{13}$+V$_{23}$-1 |
| sonst | Wenn V$_{13}$≥0 V$_{32}$≥0 | Zustand der Transistoren | I _ _ / _ I I | I _ I / _ I _ | I I I od. _ _ _ / _ _ _ I I I |
| | | Relative Dauer | V$_{13}$ | V$_{23}$ | 1 +V$_{21}$ |
| | Wenn V$_{23}$≥0 V$_{31}$≥0 | Zustand der Transistoren | _ I _ / I _ I | _ I I / I _ _ | I I I od. _ _ _ / _ _ _ I I I |
| | | Relative Dauer | V$_{31}$+V$_{32}$-1$^-$ | V$_{31}$ | 1+V$_{12}$ |

wobei in dieser Tabelle die Zustände der Transistoren jeweils auf zwei Zeilen angegeben werden, von denen die erste den Schaltern ($I_1$, $I_2$, $I_3$) entspricht, die einerseits mit den drei vorgenannten Knoten ($N_1$, $N_2$, $N_3$) und andererseits mit einer Speiseklemme zur Stromversorgung der Brückenschaltung verbunden sind, während die zweite den Schaltern ($I_4$, $I_5$, $I_6$) entspricht, die einerseits mit den drei vorgenannten Knoten und andererseits mit einem Punkt mit Neutral- oder Nullspannung verbunden sind, während die Symbole I und _ die geöffneten oder geschlossenen Zustände der verschiedenen Schalter I ($I_1$ bis $I_6$) der Brückenschaltung darstellen,

wobei sich die Fälle, in denen $i_2.i_3 \geq 0$ oder $i_3.i_I \geq 0$ gilt, durch Vertauschung von Indices der vorstehenden Tabelle ergeben.

**2.** Vorrichtung zur Stromversorgung einer Last, umfassend eine Brückenschaltung mit Schaltern ($I_1$bis $I_6$), eine Gleichspannungsquelle (S), welche die besagte Brückenschaltung speist, zwischen den Enden der besagten Brückenschaltung geschaltete kapazitive Mittel (C) sowie eine Steuereinheit $U_c$, welche die Schalter ($I_1$ bis $I_6$) der besagten Brückenschaltung ansteuert, um die Last ($M_T$) durch Pulsweitenmodulation zu regeln, **dadurch gekennzeichnet, dass** die Steuereinheit ($U_c$) die Schalter ($I_1$ bis $I_6$) der besagten Brückenschaltung nach dem Verfahren von Anspruch 1 ansteuert.

**3.** Stromversorgungsvorrichtung nach Anspruch 2, **dadurch gekennzeichnet, dass** sie Mittel zur Messung des Stroms in den verschiedenen Ausgangssträngen der Dreiphasenbrückenschaltung umfasst, wobei die so gemessenen Stromwerte an die Steuereinheit ($U_c$) übertragen werden, wobei die besagte Einheit die Schalter ($I_1$ bis $I_4$) der besagten Brückenschaltung nach Maßgabe der besagten Stromwerte ansteuert.

**4.** Vorrichtung zur Stromversorgung eines Elektromotors für Kraftfahrzeuge, **dadurch gekennzeichnet, dass** sie aus einer Vorrichtung nach einem der Ansprüche 1 bis 3 besteht.

EP 0 887 917 B1

FIG.1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5365422 A